# EUROPÄISCHE PATENTSCHRIFT

(11) **EP 2 980 771 B1**
(45) Veröffentlichungstag und Bekanntmachung des Hinweises auf die Patenterteilung: **15.03.2017**
(21) Anmeldenummer: 15182535.3
(22) Anmeldetag: 05.11.2013
(51) Int. Cl.: G08G 3/02

(54) **AIS-SCHIFFSTRANSCEIVER**
AIS MARINE TRANSCEIVER
ÉMETTEUR-RECEPTEUR AIS MARINE

(30) Priorität: 05.11.2012 DE 102012110540
(43) Veröffentlichungstag der Anmeldung: 03.02.2016
(62) Teilanmeldung aus: 13191616.5
(73) Patentinhaber: Deutsches Zentrum für Luft- und Raumfahrt e.V., 51147 Köln (DE)
(72) Erfinder: BEHRENS, Jörg, 28355 Bremen (DE); DEMBOVSKIS, Andis, Glasgow G3-7YE (GB)
(74) Vertreter: Aisch, Sebastian

(56) Entgegenhaltungen:
- US-A1- 2008 086 267
- US-B1- 6 459 891
- US-B1- 6 515 619
- "Improved satellite detection of AIS", Report ITU-R M.2169, 1. Januar 2010 (2010-01-01), Seiten 1-12, XP055098795, Geneva Gefunden im Internet: URL:http://www.itu.int/dms_pub/itu-r/opb/r ep/R-REP-M.2169-2009-PDF-E.pdf [gefunden am 2014-01-28]

## Beschreibung

Die Erfindung betrifft einen AIS-Schiffstransceiver, der zum Einbau auf einem Schiff vorgesehen ist, um Schiffsdaten enthaltene AIS-Funksignale senden und empfangen zu können, mit einer AIS-Funksendeeinheit, die zum Senden von Schiffsdaten enthaltenen Funksignalen eines ersten AIS-Funksignaltyps ausgebildet ist, wobei die AIS-Funksignale des ersten AIS-Funksignaltyps zum Austausch von Schiffsdaten der Schiffe untereinander vorgesehen sind, und die zum Senden von Schiffsdaten enthaltenen AIS-Funksignalen eines zweiten AIS-Funksignaltyps ausgebildet ist, wobei die AIS-Funksignale des zweiten AIS-Funksignaltyps zum Empfang durch einen Satelliten und zum Übertragen der in den AIS-Funksignalen des zweiten AIS-Funksignaltyps enthaltene Schiffsdaten an eine Bodenstation mittels des Satelliten vorgesehen sind, und mit einer AIS-Funkempfangseinheit, die zum Empfangen von Schiffsdaten enthaltenen AIS-Funksignalen des ersten AIS-Funksignaltyps, die von AIS-Schiffstransceivern benachbarter Schiffe ausgesendet wurden, ausgebildet ist. Die Erfindung betrifft ebenso ein Verfahren zum Senden und Empfangen vom Schiffsdaten enthaltenden AIS-Funksignalen durch einen derartigen AIS-Schiffstransceiver hierzu.

Die Überwachung des weltweit zunehmenden Schiffsverkehrs basiert heute überwiegend auf Radarüberwachung, Sprechfunk, sowie der Nutzung von AIS (Automatic Identification System). Seit dem Jahr 2000 ist das AIS von der Internationalen Schifffahrtsorganisation (IMO) als verbindlicher Standard festgelegt worden, um die Sicherheit des internationalen Schiffsverkehrs zu erhöhen. Dieses lokal begrenzte Funksystem dient zum Austausch von Navigations- und anderen Schiffsdaten, die es den Schiffen ermöglichen sollen, einen umfassenden Überblick über den benachbarten Schiffverkehr zu erhalten. Primäres Ziel ist dabei, Kollision zwischen Schiffen zu vermeiden.

Mit Hilfe eines auf den Schiffen angeordneten AIS-Schiffstransceiver werden abwechselnd auf zwei Kanälen im UKW-Seefunkbereich, nämlich zum einen auf 161,975 MHz und zum anderen auf 162,025 MHz, AIS-Funksignale, welche die entsprechenden Schiffsdaten, wie beispielsweise Navigationsdaten, im Broadcastverfahren aussendet. Das Aussenden der einzelnen AIS-Funksignale erfolgt dabei in festen Zeitspalten deren Belegung selbstständig durch die betreffenden Teilnehmer einer AIS-Funkzelle abgestimmt wird, so genanntes (SOTDMA Self Organising Time Division Multiple Access). Somit stehen pro Minute lediglich 2.250 Zeitschlitze zur Übertragung von Daten den einzelnen Teilnehmern zur Verfügung.

Mit Hilfe des an Bord verbauten AIS-Schiffstransceiver können die von den anderen Schiffen ausgesendeten Funksignale empfangen werden, wobei die in den AIS-Funksignalen enthaltenen Schiffsdaten dann extrahiert werden können. Durch den Empfang von den Schiffsdaten verschiedener Schiffe in der Umgebung eines Schiffes lässt sich somit ein Überblick über den benachbarten Schiffsverkehr bzw. der benachbarten Schiffe ableiten, so dass ein Schiff beispielsweise feststellen kann, in welche Richtung und mit welcher Geschwindigkeit benachbarte Schiffe, die beispielsweise aufgrund schlechter Sichtverhältnisse nicht direkt sichtbar sind, fahren. Somit lassen sich Kollisionen vermeiden und ein wesentlich verbessertes, wenn auch lokal begrenztes Lagebild erzeugen.

Aufgrund des verwendeten UKW-Frequenzbandes entspricht die Funkreichweite von AIS von Schiff zu Schiff ca. 40 bis 60 km, was ein wenig mehr als der normalen Sichtweite auf Hoher See entspricht. Küstenstationen können durch ihre höhere Position einen Umkreis von bis zu 100 km abdecken. Aufgrund der beschränkten Reichweite sowie des verwendeten SOTDMA-Übertragungsprotokolls bilden Schiffe, die sich gegenseitig sehen und empfangen können, eine AIS-Funkzelle innerhalb derer die Teilnehmer kollisionsfrei senden und empfangen können.

Damit stellt das AIS lediglich ein lokales Funksystem dar, das zwar für ein auf Hoher See befindliches Schiff ausreichend Zeitschlitzenkapazität zur Verfügung stellt, jedoch für eine weltweite, insbesondere satellitenbasierte Erhebung des Schiffsverkehrs nicht geeignet ist, da die Abdeckung eines Satelliten viele einzelne AIS-Funkzellen umfasst. Für Reedereien, die Schifffahrtsorganisationen oder Umweltministerien wäre jedoch eine zeitnahe Erhebung der weltweit anfallenden AIS-Schiffverkehrsdaten von großem Interesse, um insbesondere auch illegalen Machenschaften auf Hoher See entgegenzuwirken.

So ist beispielsweise aus der nachveröffentlichten DE 10 2011 113 152 A1 ein globales Schiffsüberwachungssystem bekannt, mit dem Schiffe eines Schiffverkehrs auf Hoher See zentral überwacht werden können. Hierzu weisen Verkehrsflugzeuge AIS-Empfangseinheiten auf, die auf ihrer Flugroute die von den Schiffen ausgesendeten AIS-Funksignale empfangen und zur weiteren Bearbeitung an eine Bodenstation übertragen. Hierdurch lässt sich insbesondere auf vielbefahrenen Routen eine nahezu lückenlose Abdeckung und Überwachung erreichen.

In jüngster Vergangenheit wurden Versuche unternommen, AIS-Empfangsantennen auf Satelliten anzuordnen, um so die weltweit ausgesendeten AIS-Funksignale mit Hilfe eines Satellitensystems empfangen zu können. So ist beispielsweise aus der US 2008/0086267 A1 ein satellitenbasiertes System bekannt, bei dem an den Satelliten eine AIS-Empfangseinheit angeordnet ist, um die von den Schiffen ausgesendeten AIS-Funksignale empfangen zu können. Die in den AIS-Funksignalen enthaltenen AIS-Informationen werden an eine Zentrale weitergeleitet, um so ein globales Monitoring des Schiffverkehrs zu erhalten. Mit einem solchen Satellitensystem kann somit auch in entlegenen Regionen eine lückenlose Überwachung erreicht werden.

Insbesondere die westlichen Industrienationen fordern im Zuge ihrer Terrorbekämpfung die Einführung der Kontrolle des Seeverkehrs aus dem All. Allerdings haben derartige satellitenbasierte Überwachungssysteme im Hinblick auf die AIS-Funksignale in hoch frequentierten Seegebieten den erheblichen Nachteil, dass die Detektion von Schiffen nicht mehr hinreichend genau realisiert werden kann. Aufgrund der extremen Flughöhe eines Satelliten wird ein Empfangsbereich mit einem Durchmesser von ca. 5.000 bis 6.000 km erzeugt. Da sich das AIS als lokales Funksystem selbstständig in einzelne Funkzellen organisiert, die alle auf dem gleichen Frequenzband senden, kommt es bei einem derart großen Empfangsradius jedoch zum Empfang einer Vielzahl von Funkzellen mit identischen Sendefrequenz und Zeitschlitzen, so dass sich AIS-Funksignale verschiedener AIS-Funkzellen überlagern und eine normale Datenverarbeitung nicht mehr möglich ist. Gerade auf hoch frequentierten Schifffahrtsrouten oder in Hafen- und Küstennähe wird durch den Empfangsbereich des Satelliten eine derart große Anzahl von Schiffen abgedeckt, dass eine hinreichend sichere Überwachung aufgrund der Signalkollisionen nicht mehr möglich ist.

Um diesem Problem zu begegnen, werden zukünftig neben den bereits existierenden AIS-Frequenzen (AIS1:161,975 MHz; AIS2:162,025 MHz) zwei zusätzliche UKW-Kanäle für eine satellitengestützte Überwachung mit Hilfe von AIS-Funksignalen zur Verfügung gestellt. Hierzu sollen für die Kommunikation speziell die Kanäle auf 156,775 MHz (AIS3) und 156,875 (AIS4) für den Empfang von AIS-Funksignalen aus dem Weltraum per Satellit zugeordnet werden. Hintergrund der Einführung der zusätzlichen Satelliten-AIS (SAT-AIS) Frequenzen ist es, ein möglichst vollständiges maritimes Lagebild mit Hilfe von SAT-AIS auf Hoher See entfernt von den Küstenregionen zu erhalten. Dies ist derzeit allein mit AIS1 und AIS2 aus den oben genannten Gründen (Interferenzen) nicht möglich.

Nach der Definition der ITU (ITU-R-M-1371-4 und ITU-R-M.2169) werden AIS3 und AIS4 Funksignale schiffsseitig automatisch ausgeschaltet, wenn sich die Schiffe in dem Kommunikationsbereich von sogenannten AIS-Bodenstationen (AIS-Base-Stations) befinden, die in der Regel an der Küste installiert sind. Empfängt ein Schiff einen von einer AIS-Bodenstation ausgesendeten "Base Station Report" (Message 4) mit der Aufforderung, SAT-AIS abzuschalten (Control-bit für "Transmission control for longrange broadcast message"), so deaktiviert der auf dem Schiff installierte AIS-Schiffstransceiver das Aussenden der AIS3/AIS4-Funksignale für die satellitengestützte Überwachung. Dadurch soll erreicht werden, dass in Küstenregionen, die in der Regel aufgrund der Konzentration des Schiffsverkehrs stark befahren sind, keine AIS3/AIS4-Funksignale ausgesendet werden sollen, um den Satellitenempfang aufgrund einer Vielzahl von Funksignale, die sich gegenseitig überlagern können, nicht zu stören. Die Überwachung erfolgt dann über die AIS-Bodenstationen. Befindet sich das Schiff außerhalb des Kommunikationsbereiches einer AIS-Bodenstation so wird schiffsseitig das Aussenden der AIS3/AIS4-Funksignale für die satellitengestützte Überwachung automatisch wieder eingeschaltet.

Allerdings gibt es derzeit weltweit nur eine sehr geringe Anzahl von derartigen AIS-Bodenstationen, wobei meist nur reine AIS-Empfangsstationen im küstennahen Bereich betrieben werden, die zwar für ein küstennahes Schiffsmonitoring ausreichend sind, jedoch aufgrund der fehlenden Sendeeinheit keine AIS-Bodenstations-Nachricht aussenden können und somit der AIS-Schiffstransceiver auch in Küstennähe im Kommunikationsbereich von AIS-Bodenempfangseinheiten weiterhin AIS3/AIS4-Funksignale aussenden. Hierdurch ergibt sich jedoch in Küstennähe bei Fehlen einer AIS-Bodenstation das Problem, dass die Schiffe weiterhin auf den AIS3/AIS4-Frequenzen ihre AIS-Funksignale für die satellitengestützte Überwachung aussenden, wodurch es bei Satelliten, die diesen aufgrund der Vielzahl von Funksignalen zu Kollisionen kommt, so dass auch mit dem neu eingeführten Frequenzen eine hinreichende Überwachung des Schiffsverkehrs nicht mehr sichergestellt werden kann.

Aus der US 6,515,619 B1 ist ein Verfahren und ein System zum Ermitteln der Position von Satellitentelefonen bekannt, wobei das Satellitentelefon zum Empfangen einer Nachricht ausgebildet ist, basierend darauf dann das Satellitentelefon seine Position bestimmt und die so bestimmte Position dann an eine Basisstation über die Satellitenkommunikation überträgt. Dabei kann zum Einsparen von Energie nur dann eine Positionsnachricht an die Basisstation übertragen werden, wenn sich die aktuelle Position gegenüber einer vorher ermittelten Position verändert hat.

Vor diesem Hintergrund ist es Aufgabe der vorliegenden Erfindung, einen verbesserten AIS-Schiffstransceiver sowie ein Verfahren hierzu anzugeben, mit dem Signalkollisionen insbesondere in hoch frequentierten Schiffsverkehrsbereichen beim Aussenden von AIS3/AIS4-Funksignalen zur satellitengestützten Überwachung verringert oder vermieden werden können, um so die Qualität der satellitengestützten Überwachung mittels AIS3/AIS4-Funksignalen zu verbessern.

Die Aufgabe wird mit den kennzeichnenden Merkmalen des Patentanspruches 1 sowie mit den kennzeichnenden Merkmalen des nebengeordneten Patentanspruches 8 erfindungsgemäß gelöst.

Gemäß Anspruch 1 wird ein AIS-Schiffstransceiver der eingangs genannten Art vorgeschlagen, der erfindungsgemäß eine Steuereinheit aufweist, die eingerichtet ist, das Senden der AIS-Funksignale (AIS3/AIS4) des zweiten AIS-Funksignaltyps (SAT-AIS) durch die AIS-Funksendeeinheit in Abhängigkeit von einer durch eine Positionsermittlungseinheit ermittelten aktuellen Schiffposition zu deaktivieren und/oder zu aktivieren.

Erfindungsgemäß soll gemäß der Erfindung das Senden der AIS-Funksignale (AIS3/AIS4) des zweiten AIS-Funksignaltyps in Abhängigkeit einer aktuellen Schiffposition aktiviert oder deaktiviert werden, um so das Aussenden von AIS-Funksignalen zu verhindern, wenn sich das Schiff an einer entsprechenden Position befindet und/oder das Aussenden der AIS-Funksignale für die satellitengestützte Kommunikation (AIS3/AIS4) zu aktiveren, wenn sich das Schiff beispielsweise auf Hoher See befindet, was durch die aktuelle Schiffsposition ermittelt durch eine Positionsermittlungseinheit feststellbar ist.

Dadurch kann erreicht werden, dass Schiffe das Aussenden der AIS3/AIS4-Funksignale für die satellitengestützte Überwachung in Abhängigkeit ihrer Schiffsposition abschalten, um so beispielsweise in dicht befahrenen Gewässern oder Regionen das Risiko von Signalkollisionen bei der satellitengestützten Überwachung aufgrund der hohen Schiffsdichte zu verringern bzw. zu vermeiden. So lassen sich zwar die Schiffe, bei denen das Aussenden der satellitengestützten AIS-Funksignale ausgeschaltet wurde, nicht mehr über das Satellitenüberwachungssystem verfolgen. Da sich jedoch die dicht befahren Regionen meisten in Küstennähe und somit in Reichweite von Empfangsstationen befinden, kann ein entsprechendes Monitoring der Schiffe über Bodenstationen erfolgen, während das Monitoring bzw. Überwachen anderer Schiffe über das satellitengestützte Überwachungssystem der AIS3/AIS4-Funksignale erfolgen kann. Hierdurch wird ein Totalausfall der satellitengestützten Überwachung aufgrund einer zu hohen Schiffsdichte in einem bestimmten Gebiet im gesamten Empfangsbereich des Satelliten vermieden.

Der übergeordnete Erfindungsgedanke besteht somit darin, dass Aussenden von AIS-Funksignalen (AIS3/AIS4) für die satellitengestützte Überwachung durch einen AIS-Schiffstransceiver zu unterdrücken, wenn die Gefahr zu befürchten ist, dass aufgrund einer starken Zunahme der Schiffsdichte in einem bestimmten Teil des Empfangsbereiches des Satelliten die daraus resultierenden Signalkollisionen beim Aussenden der AIS3/AIS4-Funksingale zu einem Empfangsblackout im gesamten Empfangsbereich des Satelliten führen würde. Denn dies hätte zur Folge, dass im gesamten Empfangsbereich des Satelliten ein sicherer Empfang der AIS3/AIS4-Funksingale nicht mehr möglich ist.

Unter einem AIS-Schiffstransceiver im Sinne vorliegenden Erfindung wird eine Einrichtung verstanden, mit der AIS-Funksignale ausgesendet und AIS-Funksignale empfangen werden können. Über eine Schnittstelle sind derartige AIS-Schiffstransceiver nicht selten mit weiteren Geräten oder Einrichtungen verbunden, um entsprechende Schiffsdaten, die mit Hilfe der AIS-Funksignale an andere Schiffe ausgesendet werden sollen, zu ermitteln. So kann ein AIS-Schiffstransceiver beispielsweise mit einer Positionsermittlungseinheit verbunden sein, um die aktuelle Schiffsposition ermitteln zu können. Dies kann beispielsweise mit Hilfe eines GPS-Empfängers erfolgen. Denkbar ist aber auch, dass eine derartige Positionsermittlungseinheit integraler Bestandteil des AIS-Schiffstransceivers ist.

Ein derartiger AIS-Schiffstransceiver ist dabei zum Einbau auf einem Schiff vorgesehen und ausgebildet und weist hierfür die entsprechenden Merkmale auf.

Ein derartiger AIS-Schiffstransceiver weist in der Regel eine AIS-Funksendeeinheit und eine AIS-Funkempfangseinheit auf, wobei mit Hilfe der AIS-Funksendeeinheit AIS-Funksignale ausgesendet werden können und mit Hilfe der AIS-Funkempfangseinheit die entsprechend von anderen Schiffen ausgesendeten Funksignale empfangen werden können.

Eine solche AIS-Funksendeeinheit ist dabei ausgebildet, mindestens zwei verschiedene AIS-Funksignaltypen auszusenden. Bei dem ersten AIS-Funksignaltyp (TER-AIS) handelt es sich um AIS-Funksignale (AIS1/AIS2), die zum Austausch von Schiffsdaten der Schiffe untereinander vorgesehen sind. Derartige AIS-Funksignale werden auf den Frequenzen 161,975 MHz und 162,025 MHz ausgesendet und entsprechen den bereits im Jahre 2000 beschlossenen Standards bezüglich AIS. Solche AIS-Funksignale des ersten AIS-Funksignaltyps werden demgemäß auch von den Empfangseinheiten anderer Schiffe empfangen und die in diesen AIS-Funksignalen enthaltenen Schiffsdaten entsprechend extrahiert und ausgewertet, um so das kooperative Lagebild im Schiffsverkehr auf den einzelnen Schiffen erzeugen zu können.

In Abgrenzung hierzu können die AIS-Funksendeeinheiten des Weiteren AIS-Funksignale (AIS3/AIS4) eines zweiten AIS-Funksignaltyps (SAT-AIS) aussenden, wobei diese AIS-Funksignale dieses Funksignaltyps dazu vorgesehen sind, nicht durch andere Schiffe empfangen zu werden, sondern durch einen Satelliten.

AIS-Funksignale dieses Funksignaltyps werden gemäß der vorgeschlagenen Empfehlung der ITU auf den UKW-Kanälen 156,775 MHz (AIS3) und 156,875 MHz (AIS4) durch die AIS-Funksendeeinheiten ausgesendet. Im Gegensatz zu den AIS-Funksignalen des ersten Funksignaltyps werden die Funksignale des zweiten Funksignaltyps nicht von den Empfangseinheiten der anderen Schiffe empfangen und dienen lediglich der satellitengestützten Überwachung.

In einer vorteilhaften Ausführungsform ist die Steuereinheit mit einer Datenbank verbunden, in der die Positionen von Küstenlinien hinterlegt sind. Hierbei ist die Steuereinheit nun so eingerichtet, dass sie die Entfernung des Schiffes zur Küste mittels der aktuellen Position des Schiffes und der in der Datenbank hinterlegten Position der Küstenlinie ermitteln kann, so dass die Steuereinheit weiß, wie weit sich das Schiff an der aktuellen Schiffsposition von der nächstgelegenen Küste entfernt befindet. Anhand dieser Information deaktiviert und/oder aktiviert die Steuereinheit nun das Senden der AIS-Funksignale (AIS3/AIS4) des zweiten AIS-Funksignaltyps, um so beispielsweise in Küstennähe das Senden der AIS-Funksignale des zweiten AIS-Funksignaltyps für die satellitengestützte Überwachung zu deaktivieren und in Küstenferne entsprechend wieder zu aktivieren. Denn gerade in Küstennähe ist die Gefahr zu befürchten, dass aufgrund einer hohen Schiffsdichte der Empfang beim Satelliten aufgrund von Signalkollision gestört ist.

Darüber hinaus wird in dieser Ausführungsform der Vorteil erreicht, dass sich das Schiff nicht zwangsläufig im Kommunikationsbereich einer der wenigen AIS-Bodenstationen befinden muss, damit das Aussenden der AIS-Funksignale des zweiten AIS-Funksignaltyps deaktiviert wird, so dass aufgrund der Küstennähe die Funksignale des ersten AIS-Funksignaltyps durch AIS-Empfangsstationen an der Küste, die wesentlich häufiger anzutreffen sind, erfolgen kann.

So kann ein globales Schiffsmonitoring in Küstennähe mit Hilfe von AIS-Empfangsstationen sicher durchgeführt werden, obwohl das Aussenden der AIS-Funksignale der zweiten AIS-Funksignaltyps für die satellitengestützte Überwachung ausgeschaltet ist und obwohl sich das Schiff nicht in einem Kommunikationsbereich einer AIS-Bodenstation, die eine entsprechende AIS-Bodenstations-Nachricht zum Ausschalten des Aussendens des zweiten AIS-Funksignaltyps aussendet, befindet. Hierdurch können Signalkollisionen insbesondere in Küstennähe im Empfangsbereich des Satelliten verringert bzw. vermieden werden.

Vorteilhafterweise wird das Aussenden des zweiten AIS-Funksignaltyps deaktiviert, wenn die Entfernung des Schiffes zur Küste eine bestimmte Referenzentfernung unterschreitet und/oder das Aussenden des zweiten AIS-Funksignaltyps wieder aktiviert, wenn die Entfernung des Schiffes zur Küste eine vorgegebene Referenzentfernung überschreitet.

Vorteilhafterweise kann die Steuereinheit des AIS-Schiffstransceivers zusätzlich so eingerichtet sein, dass das Senden der AIS-Funksignale (AIS3/AIS4) des zweiten AIS-Funksignaltyps (SAT-AIS) durch die AIS-Funksendeeinheit in Abhängigkeit von einer Anzahl benachbarter Schiffe deaktiviert und/oder aktiviert wird.

Hierdurch kann erreicht werden, dass bei einer zufälligen Zunahme der Schiffsdichte in einem bestimmten Teil des Empfangsbereich des Satelliten das Aussenden der AIS-Funksignale für die satellitengestützte Überwachung bei einigen Schiffen abgeschaltet wird, so dass nicht im gesamten Empfangsbereich des Satelliten aufgrund von Signalkollisionen ein Empfang von AIS3/AIS4-Funksignalen unmöglich wird. Vielmehr kann hierdurch erreicht werden, dass in dem Teilbereich des Empfangsbereich des Satelliten, in dem eine zufällige Häufung und Zunahme der Schiffsdichte erfolgt ist, dass Aussenden ihrer AIS-Funksignale für die satellitengestützte Überwachung ausgeschaltet wird, so dass zumindest andere Schiffe des Empfangsbereiches des Satelliten weiterhin über die satellitengestützte Überwachung kontrolliert und überwacht werden können.

In einer weiteren vorteilhaften Ausführungsform hierzu ist der AIS-Schiffstransceiver dazu eingerichtet, die Anzahl der benachbarten Schiffe in Abhängigkeit von empfangenen AIS-Funksignalen des ersten AIS-Funksignaltyps, die von benachbarten Schiffen ausgesendet wurden, zu ermitteln. Aufgrund der Tatsache, dass benachbarte Schiffe mit Hilfe des AIS und dem zugrunde gelegten selbstorganisierendem Protokoll eine einstellige Funkzelle bilden, in der kollisionsfrei senden können, kann der AIS-Schiffstransceiver die Anzahl der Schiffe feststellen, von denen er AIS-Funksignale kollisionsfrei empfangen kann. Hieraus lässt sich die Anzahl der benachbarten Schiffe zu dem empfangenen AIS-Schiffstransceiver ermitteln. Als Grundlage hierfür dienen dabei die AIS-Funksignale (AIS1/AIS2) des ersten AIS-Funksignaltyps (TER-AIS). Hierbei ist denkbar, dass der AIS-Schiffstransceiver selber die Anzahl ermittelt oder die Funktionalität in ein extra Modul, beispielsweise die Steuereinheit, auslagert.

Hierbei ist es nun besonders vorteilhaft, wenn die Steuereinheit eingerichtet ist, bei Überschreiten einer bestimmten Anzahl benachbarter Schiffe über eine vorgegebene Referenzanzahl des Senden der AIS-Funksignale des zweiten AIS-Funksignaltyps zu deaktivieren um so die Gefahr einer Signalkollision im Empfangsbereich eines Satelliten zu verringern bzw. zu vermeiden. Zwar können diese Schiffe dann nicht mehr über das satellitengestützte Überwachungssystem überwacht und kontrolliert werden. Allerdings ist dieser Zustand meist nur temporär, da die zufällige Erhöhung der Schiffsdichte in einem bestimmten Empfangsbereich des Satelliten sich auch schnell wieder auflösen kann. Für diesen Zeitraum jedoch bleibt der Satellit in dem gesamten Empfangsbereich weiterhin empfangsbereit, so dass AIS-Funksignale des zweiten AIS-Funksignaltyps anderer Schiffe weiterhin empfangen werden können. Es kommt somit nicht zu einem vollständigen Empfangsblackout im gesamten Empfangsbereich nur weil in einem bestimmten Teil des Empfangsbereiches es zu einer ungewöhnlichen Häufung von Schiffen gekommen ist.

Daher kann die Steuereinheit des weiteren eingerichtet sein, bei Unterschreiten der ermittelten Anzahl von benachbarten Schiffen unter die vorgegebene Referenzanzahl das Senden der AIS-Funksignale des zweiten AIS-Funksignaltyps wieder zu aktivieren, so dass bei Verringerung der Schiffsdichte das Senden der Funksignale des zweiten AIS-Funksignaltyps wieder aufgenommen werden kann und so die Schiffe wieder über das satellitengestützte Überwachungssystem kontrolliert werden können.

In einer weiteren vorteilhaften Ausführungsform ist die Steuereinheit mit einer Datenbank verbunden, in der Daten bezüglich gültiger AIS-Bodenstationen hinterlegt sind. AIS-Bodenstationen sind dabei jene in Küstennähe errichteten AIS-Sende- und Empfangsstationen, die neben einer Empfangseinheit auch eine Sendeeinheit aufweisen, um eine AIS-Bodenstations-Nachricht (Message 4) auszusenden. Die AIS-Bodenstations-Nachricht wird in der Regel im Broadcastverfahren ausgesendet und von den Schiffen dann empfangen, wenn die Schiffe sich im Empfangsbereich der AIS-Bodenstation befinden. Eine solche AIS-Bodenstations-Nachricht kann bspw. die Message 4 (Base station report) des AIS-Standards sein. In einer solchen AIS-Bodenstations-Nachricht finden sich meist Daten bezüglich der AIS-Bodenstation, bspw. eine ID, die Position, etc.

Wird eine solche AIS-Bodenstations-Nachricht von einem Schiff empfangen, so wird das Aussenden der AIS-Funksignale des zweiten AIS-Funksignaltyps automatisch deaktiviert oder aktiviert. Bei einer Message 4 des AIS-Standards wird hierzu das "Transmission control for longrange broadcast message" Bit auf "0" gesetzt, um das Senden zu deaktivieren oder auf "1" gesetzt, um das Senden zu aktivieren.

Die Steuereinheit ist nun derart eingerichtet, dass die AIS-Bodenstation, die eine solche AIS-Bodenstations-Nachricht ausgesendet hat, anhand ihrer Daten in der Nachricht mit den Daten in der Datenbank validiert werden kann. In Abhängigkeit des Validierungsergebnisses wird dann das Aussenden der AIS-Funksignale des zweiten AIS-Funksignaltyps automatisch aktiviert und/oder deaktiviert. Führt bspw. das Validierungsergebnis zu einer nicht gültigen AIS-Bodenstation (fake), so wird die ausgesendete AIS-Bodenstations-Nachricht ignoriert und gegebenenfalls das Aussenden der AIS-Funksignale des zweiten AIS-Funksignaltyps automatisch aktiviert.

Hierdurch kann der Vorteil erreicht werden, dass ein Missbrauch dieser Funktionalität eingeschränkt wird, beispielsweise dann, wenn mit Hilfe von "Fake-Bodenstationen" Piraten versuchen, dass Aussenden der Funksignale des zweiten Funksignaltyps auf den Schiffen automatisch ausschalten zu lassen, damit die Position des Schiffes nicht mehr nachverfolgt werden kann. Mit Hilfe einer entsprechenden Validierung vor der automatischen Abschaltung kann dieser Missbrauch durch "Fake-Bodenstationen" vermieden werden.

Die Erfindung wird anhand der beigefügten Zeichnungen näher erläutert. Es zeigen:
- Figur 1: - schematische Darstellung eines AIS-Schiffstransceivers;
- Figur 2: - schematische Darstellung des Verfahrens in Küstennähe ;
- Figur 3: - schematische Darstellung des Verfahrens bei erhöhter Schiffsdichte.

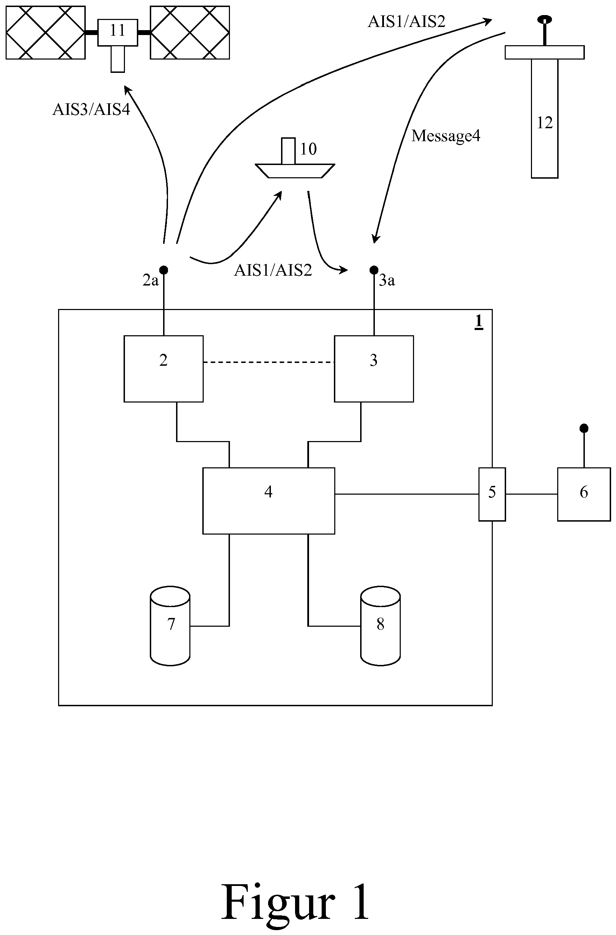

Figur 1 zeigt schematisch den erfindungsgemäßen AIS-Schiffstransceiver 1, der vorgesehen und eingerichtet ist, an Bord eines Schiffes verbaut zu werden. Der Schiffstransceiver 1 weist eine AIS-Funksendeeinheit 2 auf, mit der über eine Antenne 2a AIS-Funksignale ausgesendet werden können. Des Weiteren weist der AIS-Schiffstransceiver 1 eine AIS-Funkempfangseinheit 3 auf, die über eine Antenne 3a entsprechende AIS-Funksignale empfangen kann.

Der AIS-Schiffstransceiver 1 weist des weiteren eine mit der AIS-Funksendeeinheit 2 und der AIS-Funkempfangseinheit 3 verbundenen Steuereinheit 4 auf, um das Aussenden der AIS-Funksignale des zweiten AIS-Funksignaltyps entsprechend zu deaktivieren oder zu aktivieren. Im Ausführungsbeispiel der Figur 1 ist die Steuereinheit 4 über eine Schnittstelle 5 des AIS-Schiffstransceiver 1 mit einer Positionsermittlungseinheit 6 verbunden, die mit Hilfe eines GPS-Empfängers die aktuelle Schiffsposition des Schiffes, auf dem der AIS-Schiffstransceiver 1 verbaut ist, ermittelt und der Steuereinheit 4 zur Verfügung stellt.

Denkbar ist aber auch, dass die Funktionalität der Positionsermittlung des Schiffes integraler Bestandteil des AIS-Schiffstransceivers 1 ist.

Die Steuereinheit 4 des AIS-Schiffstransceivers 1 ist des weiteren mit einer Datenbank 7 verbunden, in der die Positionen der Küstenlinien zumindest für einen Teilbereich der Erdoberfläche hinterlegt sind. Die Steuereinheit 4 kann auf die Daten der Küsten-Datenbank 7 zugreifen.

Des Weiteren ist die Steuereinheit 4 mit einer Datenbank 8 signaltechnisch verbunden, in der Daten bezüglich gültiger AIS-Bodenstationen hinterlegt sind. Auch auf diese Daten in dieser Datenbank 8 kann die Steuereinheit 4 entsprechend zugreifen.

Die AIS-Funksendeeinheit 2 ist nun so ausgebildet, dass sie gemäß dem AIS-Standard AIS-Funksignale AIS1/AIS2 des ersten AIS-Funksignaltyps TER-AIS (Terrestrisches AIS) aussenden kann, wobei diese AIS-Funksignale AIS1/AIS2 Schiffsdaten des Schiffes, auf dem der AIS-Schiffstransceiver 1 verbaut ist, enthalten.

Diese AIS-Funksignale AIS1/AIS2 werden im Broadcastverfahren ausgesendet und von in Empfangsreichweite befindlichen Schiffen empfangen, so dass die benachbarten Schiffe 10 Schiffsdaten des auszusenden Schiffe erhalten können.

Befindet sich auf dem benachbarten Schiff 10 ein baugleicher oder ähnlicher AIS-Schiffstransceiver 1, so sendet das benachbarte Schiff 10 wiederum seine Schiffsdaten mit Hilfe von AIS-Funksignalen AIS1/AIS2 des ersten AIS-Funksignaltyps im Broadcastverfahren aus, die dann wiederum von dem AIS-Schiffstransceiver 1 mit Hilfe der Empfangseinheit 3 empfangen werden können.

Gemäß dem neueren AIS-Standard ist die AIS-Funksendeeinheit 2 des weiteren ausgebildet, AIS-Funksignale AIS3/AIS4 eines zweiten AIS-Funksignaltyps auszusenden, die dann von einem Satelliten 11 empfangen werden können. Gemäß dem AIS-Standard dienen die Funksignale des zweiten AIS-Funksignaltyps ausschließlich dazu, ein satellitengestütztes Überwachungssystem insbesondere auf Hoher See zu etablieren, um so den Schiffsverkehr lückenlos zu überwachen.

Des weiteren ist die AIS-Funkempfangseinheit 3 ausgebildet, Funksignale einer AIS-Bodenstation 12, insbesondere eine sogenannte Message 4 zu empfangen, wodurch der AIS-Schiffstransceiver 1 feststellen kann, dass er sich im Empfangsbereich einer AIS-Bodenstation befindet, wenn er eine solche Message 4 empfangen hat. In diesem Fall ist der AIS-Schiffstransceiver 1 ausgebildet, das Aussenden der AIS-Funksignale AIS3/AIS4 des zweiten AIS-Funksignaltyps zu deaktivieren, da im Kommunikationsbereich der AIS-Bodenstation 12 die AIS-Funksignale AIS1/AIS2 des ersten AIS-Funksignaltyps von der AIS-Bodenstation zur Überwachung des Schiffsverkehrs empfangen werden kann. Um Signalkollisionen im Empfangsbereich des Satelliten 11 zu vermeiden, wird dieser Kommunikationsweg zeitweise deaktiviert. Die Steuereinheit 4 ist nun eingerichtet, in Abhängigkeit der aktuellen Schiffsposition und/oder in Abhängigkeit der Anzahl benachbarter Schiffe 10 das Aussenden der AIS-Funksignale AIS3/AIS4 des zweiten AIS-Funksignaltyps zu aktivieren und/oder zu deaktivieren, um Signalkollisionen im Empfangsbereich des Satelliten 11 zu vermeiden.

Die Steuereinheit 4 kann beispielsweise derart eingerichtet sein, dass sie in Abhängigkeit der aktuellen Schiffspositionen des Schiffes sowie der Positionen der Küstenlinie hinterlegt in der Datenbank 7 die Entfernung zur Küste ermittelt und in Abhängigkeit das Aussenden der Funksignale des zweiten Funksignaltyps aktiviert oder deaktiviert.

Des weiteren ist im Ausführungsbeispiel der Figur 1 die Steuereinheit so ausgebildet, dass sie anhand der in der Datenbank 8 hinterlegten Daten der gültigen AIS-Bodenstationen die Bodenstation 12 von der eine Message 4 empfangen wurde, validiert, um so festzustellen, ob es sich um eine gültige AIS-Bodenstation handelt und der satellitengestützte Überwachungskommunikationskanal ausgeschaltet werden kann.

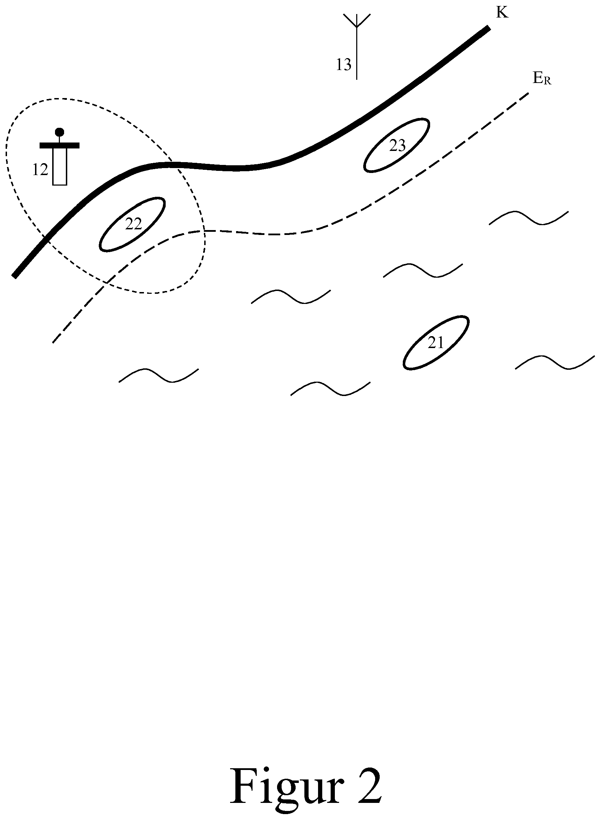

Figur 2 zeigt schematisch eine Küstenlinie, vor der sich mehrere Schiffe 21 bis 23 befinden. Alle Schiffe 21 bis 23 sind mit einem AIS-Schiffstransceiver 1 der Figur 1 ausgerüstet und können insbesondere die Entfernung zur Küste ermitteln.

Im Beispiel der Figur 2 würde das Schiff 21 nunmehr feststellen, dass die Entfernung zur Küste K über einer Referenzentfernung E_{R} liegt, so dass das Schiff 21 AIS-Funksignale AIS3/AIS4 des zweiten AIS-Funksignaltyps aussendet. Das Schiff 22 wiederum befindet sich in einer Entfernung zur Küste K, die innerhalb der Referenzentfernung liegt, so dass hier das Aussenden der Funksignale des zweiten AIS-Funksignaltyps ausgeschaltet ist. Im Beispiel des Schiffes 22 erfolgt die Kommunikation nunmehr über eine in der Nähe befindliche AIS-Bodenstation 12.

Das Schiff 23 der Figur 2 ist jedoch nicht im Empfangsbereich der AIS-Bodenstation 12, jedoch in einer Entfernung zur Küste, die unterhalb der Referenzentfernung E_{R} liegt. Auch hier ist das Aussenden der Funksignale des zweiten AIS-Funksignaltyps ausgeschaltet, wobei die AIS-Funksignale des ersten AIS-Funksignaltyps durch eine AIS-Empfangsstation zur Überwachung empfangen werden kann.

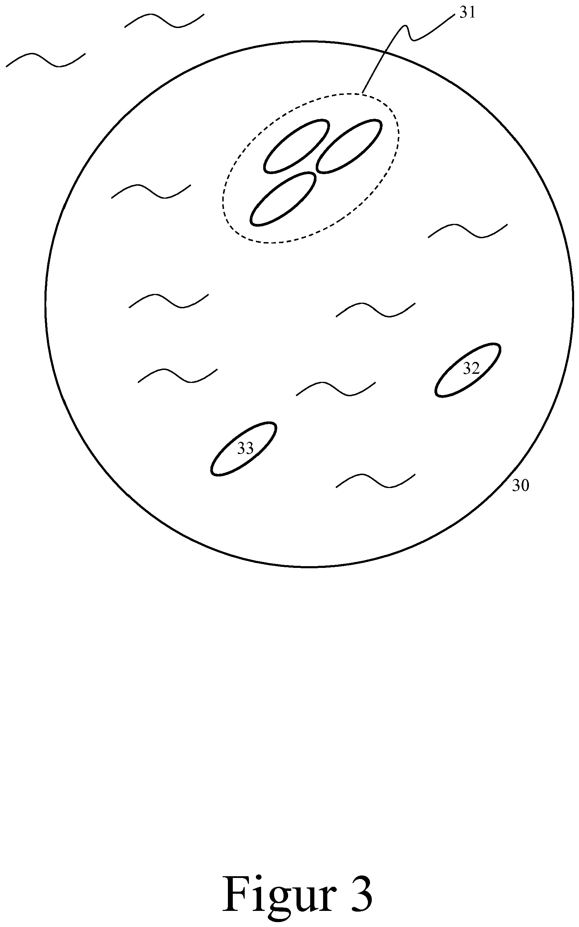

Figur 3 zeigt schematisch den Empfangsbereich 30 eines Satelliten. Aufgrund der sehr hohen Flughöhe eines Satelliten weist ein solcher Empfangsbereich 30 einen sehr großen Durchmesser auf, in der Regel ca. 5.000 bis 6.000 km. Daher deckt ein solcher Empfangsbereich 30 eines Satelliten eine Vielzahl von AIS-Funksignale aussendende Schiffe ab. Kommt es nun beispielsweise in einem bestimmten Teil 31 des Empfangsbereiches 30 zu einer Anhäufung von Schiffen unter Zunahme der Schiffsdichte so ist die Gefahr zu befürchten, dass aufgrund der hohen Schiffsdichte es zu Signalkollisionen bei den AIS-Funksignalen AIS3/AIS4 des zweiten AIS-Funksignaltyps kommt, so dass im gesamten Empfangsbereich 30 des Satelliten keine verwertbaren AIS-Funksignale mehr empfangen werden können.

Sind die Schiffe des Teilbereiches 31 mit einem erfindungsgemäßen AIS-Schiffstransceiver 1 der Figur 1 ausgestattet, so können sie selbstständig die Anzahl der benachbarten Schiffe ermitteln, woraufhin die Steuereinheit 4 der AIS-Schiffstransceiver 1 der AIS-Funksignale AIS3/AIS4 des zweiten Funksignaltyps deaktiviert, um so die Gefahr von Signalkollisionen im Empfangsbereich 30 des Satelliten zu reduzieren.

Während der Deaktivierung des Sendens der AIS-Funksignale des zweiten Funksignaltyps sind jedoch Schiffe außerhalb dieses Teilbereiches 31 hiervon nicht betroffen, so dass die Schiffe 32, 33 auch weiterhin ihre AIS-Funksignale an den Satelliten aussenden können.

### Bezugszeichenliste

- 1: AIS-Schiffstransceiver
- 2: AIS-Funksendeeinheit
- 2a: AIS-Sendeantenne
- 3: AIS-Funkempfangseinheit
- 3a: AIS-Empfangsantenne
- 4: Steuereinheit
- 5: GPS-Schnittstelle
- 6: GPS-Empfänger
- 7: Küsten-Datenbank
- 8: GS-Datenbank
- 10: benachbarte Schiffe
- 11: Satellit
- 12: AIS-Bodenstation
- 13: AIS-Empfangsstation
- 21, 22, 23: Schiffe mit AIS-Schiffstransceiver
- 30: Empfangsbereich
- K: Küstenlinie
- E_{R}: Referenzentfernung zur Küste

## Patentansprüche

1. AIS-Schiffstransceiver (1), der zum Einbau auf einem Schiff vorgesehen ist, um Schiffsdaten enthaltende AIS-Funksignale senden und empfangen zu können, mit einer AIS-Funksendeeinheit (2), die zum Senden von Schiffsdaten enthaltenden AIS-Funksignalen (AIS1/AIS2) eines ersten AIS-Funksignaltyps (TER-AIS) ausgebildet ist, wobei die AIS-Funksignale (AIS1/AIS2) des ersten AIS-Funksignaltyps (TER-AIS) zum Austausch von Schiffsdaten der Schiffe untereinander vorgesehen sind, und die zum Senden von Schiffsdaten enthaltenden AIS-Funksignalen (AIS3/AIS4) eines zweiten AIS-Funksignaltyps (SAT-AIS) ausgebildet ist, wobei die AIS-Funksignale (AIS3/AIS4) des zweiten AIS-Funksignaltyps (SAT-AIS) zum Empfang durch einen Satelliten (11) und zum Übertragen der in den AIS-Funksignalen (AIS3/AIS4) des zweiten AIS-Funksignaltyps (SAT-AIS) enthaltenden Schiffsdaten an eine Bodenstation mittels des Satelliten (11) vorgesehen sind, und mit einer AIS-Funkempfangseinheit (3), die zum Empfang von AIS-Funksignalen (AIS1/AIS2) des ersten AIS-Funksignaltyps (TER-AIS), die von AIS-Schiffstransceivern (1) benachbarter Schiffe (10) ausgesendet wurden, ausgebildet ist, **dadurch gekennzeichnet, dass** der AIS-Schiffstransceiver (1) eine Steuereinheit (4) aufweist, die eingerichtet ist, das Senden der AIS-Funksignale (AIS3/AIS4) des zweiten AIS-Funksignaltyps (SAT-AIS) durch die AIS-Funksendeeinheit (2) in Abhängigkeit von einer durch eine Positionsermittlungseinheit (6) ermittelten aktuellen Schiffsposition zu deaktivieren und/oder zu aktivieren.

2. AIS-Schiffstransceiver (1) nach Anspruch 1, **dadurch gekennzeichnet, dass** die Steuereinheit (4) mit einer Datenbank (7) verbunden ist, in der die Positionen von Küstenlinien hinterlegt sind, wobei die Steuereinheit (4) eingerichtet ist,
- die Entfernung des Schiffes (21, 22, 23) zur Küste (K) mittels der aktuellen Position des Schiffes und der in der Datenbank hinterlegten Positionen der Küstenlinie zu ermitteln und
- das Senden der AIS-Funksignale (AIS3/AIS4) des zweiten AIS-Funksignaltyps (SAT-AIS) in Abhängigkeit von der ermittelten Entfernung des Schiffes zur Küste zu deaktivieren und/oder zu aktivieren.

3. AIS-Schiffstransceiver (1) nach Anspruch 2, **dadurch gekennzeichnet, dass** die Steuereinheit (4) eingerichtet ist, bei Unterschreiten der ermittelten Entfernung des Schiffes zur Küste unter eine vorgegebenen Referenzentfernung (Er) das Senden der AIS-Funksignale (AIS3/AIS4) des zweiten AIS-Funksignaltyps (SAT-AIS) zu deaktivieren und/oder bei Überschreiten der ermittelten Entfernung des Schiffes zur Küste über eine vorgegebenen Referenzentfernung (Er) das Senden der AIS-Funksignale (AIS3/AIS4) des zweiten AIS-Funksignaltyps (SAT-AIS) zu aktivieren.

4. AIS-Schiffstransceiver (1) nach einem der vorhergehenden Ansprüche, **dadurch gekennzeichnet, dass** die Steuereinheit eingerichtet ist, das Senden der AIS-Funksignale (AIS3/AIS4) des zweiten AIS-Funksignaltyps (SAT-AIS) durch die AIS-Funksendeeinheit (2) in Abhängigkeit von einer Anzahl benachbarter Schiffe (10) zu deaktivieren und/oder zu aktivieren.

5. AIS-Schiffstransceiver (1) nach Anspruch 4, **dadurch gekennzeichnet, dass** der AIS-Schiffstransceiver (1) eingerichtet ist, die Anzahl der benachbarten Schiffe (10) in Abhängigkeit von empfangenen AIS-Funksignalen (AIS1/AIS2) des ersten AIS-Funksignaltyps (TER-AIS), die von den benachbarten Schiffen ausgesendet wurden, zu ermitteln.

6. AIS-Schiffstransceiver (1) nach Anspruch 4 oder 5, **dadurch gekennzeichnet, dass** die Steuereinheit (4) eingerichtet ist, bei Überschreiten der ermittelten Anzahl von benachbarten Schiffen über eine vorgegebene Referenzanzahl das Senden der AIS-Funksignale (AIS3/AIS4) des zweiten AIS-Funksignaltyps (SAT-AIS) zu deaktivieren und/oder bei Unterschreiten der ermittelten Anzahl von benachbarten Schiffen unter die vorgegebene Referenzanzahl das Senden der AIS-Funksignale (AIS3/AIS4) des zweiten AIS-Funksignaltyps (SAT-AIS) zu aktivieren.

7. AIS-Schiffstransceiver (1) nach einem der vorhergehenden Ansprüche, **dadurch gekennzeichnet, dass** die Steuereinheit mit einer Datenbank (8) verbunden ist, in der Daten bezüglich gültiger AIS-Bodenstationen (12) hinterlegt sind, wobei die Steuereinheit (4) eingerichtet ist,
- nach Empfang einer von einer AIS-Bodenstation ausgesendeten AIS-Bodenstations-Nachricht (Base Station Report; Message4), mit der das Senden der AIS-Funksignale (AIS3/AIS4) des zweiten AIS-Funksignaltyps (SAT-AIS) durch den AIS-Schiffstransceiver deaktiviert und/oder aktiviert werden soll, die sendende AIS-Bodenstation (12) in Abhängigkeit von den Daten in der AIS-Bodenstations-Nachricht bezüglich der sendenden AIS-Bodenstation und den in der Datenbank hinterlegten Daten zu der sendenden AIS-Bodenstation zu validieren und
- das Senden der AIS-Funksignale (AIS3/AIS4) des zweiten AIS-Funksignaltyps (SAT-AIS) in Abhängigkeit von der Validierung zu deaktivieren und/oder zu aktivieren.

8. Verfahren zum Senden und Empfangen von Schiffsdaten enthaltenden AIS-Funksignalen durch einen AIS-Schiffstransceiver, mit den Schritten
- Senden von Schiffsdaten enthaltende AIS-Funksignale (AIS1/AIS2) eines ersten Funksignaltyps (TER-AIS), die zum Austausch von Schiffsdaten der Schiffe untereinander vorgesehen sind, durch eine AIS-Funksendeeinheit,
- Senden von Schiffsdaten enthaltende AIS-Funksignale (AIS3/AIS4) eines zweiten Funksignaltyps (SAT-AIS), die zum Empfang durch einen Satelliten und zum Übertragen der in den AIS-Funksignalen (AIS3/AIS4) des zweiten AIS-Funksignaltyps (SAT-AIS) enthaltenen Schiffsdaten an eine Bodenstation mittels des empfangenden Satelliten vorgesehen sind, durch die AIS-Funksendeeinheit, und
- Empfangen von Schiffsdaten enthaltenden AIS-Funksignalen (AIS1/AIS2) des ersten Funksignaltyps (TER-AIS), die von AIS-Schiffstransceiver benachbarter Schiffe ausgesendet wurden, durch eine AIS-Funkempfangseinheit,
**gekennzeichnet durch**
Deaktivieren oder Aktivieren des Sendens der AIS-Funksignale (AIS3/AIS4) des zweiten AIS-Funksignaltyps (SAT-AIS) in Abhängigkeit von einer **durch** eine Positionsermittlungseinheit ermittelte aktuelle Schiffsposition **durch** eine Steuereinheit,

9. Verfahren nach Anspruch 8, **dadurch gekennzeichnet, dass** die Steuereinheit mit einer Datenbank verbunden ist, in der die Positionen von Küstenlinien hinterlegt sind, wobei
- die Entfernung des Schiffes zur Küste mittels der aktuellen Position des Schiffes und der in der Datenbank hinterlegten Positionen der Küstenlinie durch die Steuereinheit ermittelt und
- das Senden der AIS-Funksignale (AIS3/AIS4) des zweiten AIS-Funksignaltyps (SAT-AIS) in Abhängigkeit von der ermittelten Entfernung des Schiffes zur Küste durch die Steuereinheit deaktiviert oder aktiviert wird.

10. Verfahren nach Anspruch 9, **dadurch gekennzeichnet, dass** bei Unterschreiten der ermittelten Entfernung des Schiffes zur Küste unter eine vorgegebenen Referenzentfernung das Senden der AIS-Funksignale (AIS3/AIS4) des zweiten AIS-Funksignaltyps (SAT-AIS) durch die Steuereinheit deaktiviert oder bei Überschreiten der ermittelten Entfernung des Schiffes zur Küste über die vorgegebenen Referenzentfernung das Senden der AIS-Funksignale (AIS3/AIS4) des zweiten AIS-Funksignaltyps (SAT-AIS) durch die Steuereinheit aktiviert wird.

11. Verfahren nach einem der Ansprüche 8 bis 10, **gekennzeichnet durch** Deaktivieren oder Aktivieren des Sendens der AIS-Funksignale (AIS3/AIS4) des zweiten AIS-Funksignaltyps (SAT-AIS) in Abhängigkeit von einer Anzahl benachbarter Schiffe **durch** eine Steuereinheit.

12. Verfahren nach Anspruch 11, **dadurch gekennzeichnet, dass** die Anzahl der benachbarten Schiffe in Abhängigkeit von empfangenen AIS-Funksignalen (AIS1/AIS2) des ersten AIS-Funksignaltyps (TER-AIS), die von den benachbarten Schiffen ausgesendet wurden, durch den AIS-Transceiver ermittelt wird.

13. Verfahren nach Anspruch 11 oder 12, **dadurch gekennzeichnet, dass** bei Überschreiten der ermittelten Anzahl benachbarter Schiffe über eine vorgegebene Referenzanzahl das Senden der AIS-Funksignale (AIS3/AIS4) des zweiten AIS-Funksignaltyps (SAT-AIS) durch die Steuereinheit deaktiviert oder bei Unterschreiten der ermittelten Anzahl von benachbarten Schiffen unter die vorgegebene Referenzanzahl das Senden der AIS-Funksignale (AIS3/AIS4) des zweiten AIS-Funksignaltyps (SAT-AIS) durch die Steuereinheit aktiviert wird.

14. Verfahren nach einem der Ansprüche 8 bis 13, **dadurch gekennzeichnet, dass** die Steuereinheit mit einer Datenbank verbunden ist, in der Daten bezüglich gültiger AIS-Bodenstationen hinterlegt sind, wobei
- nach Empfang einer von einer AIS-Bodenstation ausgesendeten AIS-Bodenstations-Nachricht (Base Station Report; Message4), mit der das Senden der AIS-Funksignale (AIS3/AIS4) des zweiten AIS-Funksignaltyps (SAT-AIS) durch den AIS-Schiffstransceiver deaktiviert und/oder aktiviert werden soll, die sendende AIS-Bodenstation (12) in Abhängigkeit von den Daten in der AIS-Bodenstations-Nachricht bezüglich der sendenden AIS-Bodenstation und den in der Datenbank hinterlegten Daten zu der sendenden AIS-Bodenstation zu validieren und
- das Senden der AIS-Funksignale (AIS3/AIS4) des zweiten AIS-Funksignaltyps (SAT-AIS) in Abhängigkeit von der Validierung durch die Steuereinheit deaktiviert oder aktiviert wird.

## Claims

1. AIS ship's transceiver (1) that is provided for installation on a ship in order to be able to send and receive AIS radio signals containing ship data, having an AIS radio transmission unit (2) that is designed to send AIS radio signals (AIS1/AIS2) of a first AIS radio signal type (TER-AIS) that contain ship data, wherein the AIS radio signals (AIS1/AIS2) of the first AIS radio signal type (TER-AIS) are provided for the interchange of ship data from the ships among one another, and that is designed to send AIS radio signals (AIS3/AIS4) of a second AIS radio signal type (SAT-AIS) that contain ship data, wherein the AIS radio signals (AIS3/AIS4) of the second AIS radio signal type (SAT-AIS) are provided for reception by a satellite (11) and for transmission of the ship data that the AIS radio signals (AIS3/AIS4) of the second AIS radio signal type (SAT-AIS) contain to a ground station by means of the satellite (11), and having an AIS radio reception unit (3) that is designed to receive AIS radio signals (AIS1/AIS2) of the first AIS radio signal type (TER-AIS) that have been emitted by AIS ship's transceivers (1) on adjacent ships (10), **characterized in that** the AIS ship's transceiver (1) has a control unit (4) that is set up to deactivate and/or to activate the sending of the AIS radio signals (AIS3/AIS4) of the second AIS radio signal type (SAT-AIS) by the AIS radio transmission unit (2) on the basis of a current ship position ascertained by a position finding unit (6).

2. AIS ship's transceiver (1) according to Claim 1, **characterized in that** the control unit (4) is connected to a database (7) that stores the positions of coastlines, wherein the control unit (4) is set up
- to ascertain the distance of the ship (21, 22, 23) from the coast (K) using the current position of the ship and the positions of the coastline that are stored in the database, and
- to deactivate and/or to activate the sending of the AIS radio signals (AIS3/AIS4) of the second AIS radio signal type (SAT-AIS) on the basis of the ascertained distance of the ship from the coast.

3. AIS ship's transceiver (1) according to Claim 2, **characterized in that** the control unit (4) is set up to deactivate the sending of the AIS radio signals (AIS3/AIS4) of the second AIS radio signal type (SAT-AIS) when the ascertained distance of the ship from the coast drops below a prescribed reference distance (Eᵣ) and/or to activate the sending of the AIS radio signals (AIS3/AIS4) of the second AIS radio signal type (SAT-AIS) when the ascertained distance of the ship from the coast exceeds a prescribed reference distance (Eᵣ).

4. AIS ship's transceiver (1) according to one of the preceding claims, **characterized in that** the control unit is set up to deactivate and/or to activate the sending of the AIS radio signals (AIS3/AIS4) of the second AIS radio signal type (SAT-AIS) by the AIS radio transmission unit (2) on the basis of a number of adjacent ships (10).

5. AIS ship's transceiver (1) according to Claim 4, **characterized in that** the AIS ship's transceiver (1) is set up to ascertain the number of adjacent ships (10) on the basis of received AIS radio signals (AIS1/AIS2) of the first AIS radio signal type (TER-AIS) that have been emitted by the adjacent ships.

6. AIS ship's transceiver (1) according to Claim 4 or 5, **characterized in that** the control unit (4) is set up to deactivate the sending of the AIS radio signals (AIS3/AIS4) of the second AIS radio signal type (SAT-AIS) when the ascertained number of adjacent ships exceeds a prescribed reference number and/or to activate the sending of the AIS radio signals (AIS3/AIS4) of the second AIS radio signal type (SAT-AIS) when the ascertained number of adjacent ships drops below the prescribed reference number.

7. AIS ship's transceiver (1) according to one of the preceding claims, **characterized in that** the control unit is connected to a database (8) that stores data for valid AIS ground stations (12), wherein the control unit (4) is set up
- to follow reception of an AIS ground station message (Base Station Report; Message4), which is emitted by an AIS ground station and which is intended to be used to deactivate and/or to activate the sending of the AIS radio signals (AIS3/AIS4) of the second AIS radio signal type (SAT-AIS) by the AIS ship's transceiver, by validating the sending AIS ground station (12) on the basis of the data in the AIS ground station message regarding the sending AIS ground station and the data pertaining to the sending AIS ground station that are stored in the database, and
- to deactivate and/or to activate the sending of the AIS radio signals (AIS3/AIS4) of the second AIS radio signal type (SAT-AIS) on the basis of the validation.

8. Method for the sending and the receiving of AIS radio signals containing ship data by an AIS ship's transceiver, having the following steps:
- AIS radio signals (AIS1/AIS2) of a first radio signal type (TER-AIS) that contain ship data and that are provided for the interchange of ship data from the ships among one another are sent by an AIS radio transmission unit,
- AIS radio signals (AIS3/AIS4) of a second radio signal type (SAT-AIS) that contain ship data and that are provided for reception by a satellite and for the transmission of the ship data that the AIS radio signals (AIS3/AIS4) of the second AIS radio signal type (SAT-AIS) contain to a ground station by means of the receiving satellite are sent by the AIS radio transmission unit, and
- AIS radio signals (AIS1/AIS2) of the first radio signal type (TER-AIS) that contain ship data and that have been emitted by AIS ship's transceivers on adjacent ships are received by an AIS radio reception unit,
**characterized by**
deactivation or activation of the sending of the AIS radio signals (AIS3/AIS4) of the second AIS radio signal type (SAT-AIS) on the basis of a current ship position ascertained by a position finding unit by a control unit.

9. Method according to Claim 8, **characterized in that** the control unit is connected to a database that stores the positions of coastlines, wherein
- the distance of the ship from the coast is ascertained by the control unit using the current position of the ship and the positions of the coastline that are stored in the database, and
- the sending of the AIS radio signals (AIS3/AIS4) of the second AIS radio signal type (SAT-AIS) is deactivated or activated by the control unit on the basis of the ascertained distance of the ship from the coast.

10. Method according to Claim 9, **characterized in that** the sending of the AIS radio signals (AIS3/AIS4) of the second AIS radio signal type (SAT-AIS) is deactivated by the control unit when the ascertained distance of the ship from the coast drops below a prescribed reference distance, or the sending of the AIS radio signals (AIS3/AIS4) of the second AIS radio signal type (SAT-AIS) is activated by the control unit when the ascertained distance of the ship from the coast exceeds the prescribed reference distance.

11. Method according to one of Claims 8 to 10, **characterized by** deactivation or activation of the sending of the AIS radio signals (AIS3/AIS4) of the second AIS radio signal type (SAT-AIS) on the basis of a number of adjacent ships by a control unit.

12. Method according to Claim 11, **characterized in that** the number of adjacent ships is ascertained by the AIS transceiver on the basis of received AIS radio signals (AIS1/AIS2) of the first AIS radio signal type (TER-AIS) that have been emitted by the adjacent ships.

13. Method according to Claim 11 or 12, **characterized in that** the sending of the AIS radio signals (AIS3/AIS4) of the second AIS radio signal type (SAT-AIS) is deactivated by the control unit when the ascertained number of adjacent ships exceeds a prescribed reference number, or the sending of the AIS radio signals (AIS3/AIS4) of the second AIS radio signal type (SAT-AIS) is activated by the control unit when the ascertained number of adjacent ships drops below the prescribed reference number.

14. Method according to one of Claims 8 to 13, **characterized in that** the control unit is connected to a database that stores data regarding valid AIS ground stations, wherein
- reception of an AIS ground station message (Base Station Report; Message4), which is emitted by an AIS ground station and which is intended to be used to deactivate and/or to activate the sending of the AIS radio signals (AIS3/AIS4) of the second AIS radio signal type (SAT-AIS) by the AIS ship's transceiver, is followed by the sending AIS ground station (12) being validated on the basis of the data in the AIS ground station message regarding the sending AIS ground station and the data pertaining to the sending AIS ground station that are stored in the database, and
- sending of the AIS radio signals (AIS3-AIS4) of the second AIS radio signal type (SAT-AIS) is deactivated or activated by the control unit on the basis of the validation.

## Revendications

1. Emetteur-récepteur de bateau AIS (1) qui est prévu pour montage sur un bateau pour pouvoir émettre et recevoir des signaux radio AIS contenant des données de bateau, avec une unité d'émission radio AIS (2) qui est constituée pour émettre des signaux radio AIS (AIS1/AIS2) contenant des données de bateau d'un premier type de signaux radio AIS (TER-AIS), pour lequel les signaux radio AIS (AIS1/AIS2) du premier type de signaux radio AIS (TER-AIS) sont prévus pour échange des données de bateau entre bateaux et qui est constituée pour émettre des signaux radio AIS (AIS3/AIS4) contenant des données de bateau d'un deuxième type de signaux radio AIS (SAT-AIS), pour lequel les signaux radio AIS (AIS3/AIS4) du deuxième type de signaux radio AIS (SAT-AIS) sont prévus pour la réception par un satellite (11) et pour la transmission des données de bateau contenues dans les signaux radio AIS (AIS3/AIS4) du deuxième type de signaux radio AIS (SAT-AIS) à une station terrestre au moyen du satellite (11) et avec une unité de réception radio AIS (3) qui est constituée pour recevoir des signaux radio AIS (AIS1/AIS2) du premier type de signaux radio AIS (TER-AIS), qui ont été émis par les émetteurs-récepteurs de bateaux AIS (1) des bateaux voisins (10) **caractérisé en ce que** l'émetteur-récepteur de bateau AIS (1) comporte une unité de commande (4) qui est agencée pour désactiver et/ou activer l'émission des signaux radio AIS (AIS3/AIS4) du deuxième type de signaux radio AIS (SAT-AIS) par l'unité émettrice radio AIS (2) en fonction d'une position de bateau actuelle déterminée par une unité de détermination de position (6).

2. Emetteur-récepteur de bateau AIS (1) selon la revendication 1 **caractérisé en ce que** l'unité de commande (4) est reliée à une banque de données (7) dans laquelle les positions des lignes côtières sont mémorisées, l'unité de commande (4) étant agencée pour
- déterminer la distance du bateau (21, 22, 23) par rapport à la côte (K) au moyen de la position actuelle du bateau et des positions de la ligne côtière mémorisées dans la banque de données, et
- désactiver et/ou activer l'émission des signaux radio AIS (AIS3/AIS4) du deuxième type de signaux radio AIS (SAT-AIS) en fonction de la distance déterminée du bateau par rapport à la côte.

3. Emetteur-récepteur de bateau AIS (1) selon la revendication 2 **caractérisé en ce que** l'unité de commande (4) est agencée pour désactiver l'émission des signaux radio AIS (AIS3/AIS4) du deuxième type de signaux radio AIS (SAT-AIS) lors du dépassement inférieur de la distance déterminée du bateau par rapport à la côte en dessous d'une distance de référence (Eᵣ) préalablement définie et/ou activer l'émission des signaux radio AIS (AIS3/AIS4) du deuxième type de signaux radio AIS (SAT-AIS) lors du dépassement de la distance déterminée du bateau par rapport à la côte au dessus d'une distance de référence (Eᵣ).

4. Emetteur-récepteur de bateau AIS (1) selon l'une quelconque des revendications précédentes **caractérisé en ce que** l'unité de commande est agencée pour désactiver et/ou activer l'émission des signaux radio AIS (AIS3/AIS4) du deuxième type de signaux radio AIS (SAT-AIS) par l'unité d'émission radio AIS (2) en fonction d'un nombre de bateaux voisins (10).

5. Emetteur-récepteur de bateau AIS (1) selon la revendication 4 **caractérisé en ce que** l'émetteur-récepteur de bateau AIS (1) est agencé pour déterminer le nombre des bateaux voisins (10) en fonction des signaux radio AIS (AIS1/AIS2) reçus du premier type de signaux AIS (TER-AIS), qui ont été émis par les bateaux voisins.

6. Emetteur-récepteur de bateau AIS (1) selon la revendication 4 ou 5 **caractérisé en ce que** l'unité de commande (4) est agencée pour désactiver l'émission des signaux radio AIS (AIS3/AIS4) du deuxième type de signaux radio AIS (SAT-AIS) lors du dépassement du nombre déterminé de bateaux voisins au-dessus d'un nombre de référence préalablement défini et/ou activer l'émission des signaux radio AIS (AIS3/AIS4) du deuxième type de signaux radio AIS (SAT-AIS) lors du dépassement inférieur du nombre déterminé de bateaux voisins en dessous du nombre de référence préalablement défini.

7. Emetteur-récepteur de bateau AIS (1) selon l'une quelconque des revendications précédentes **caractérisé en ce que** l'unité de commande est reliée à une banque de données (8) dans laquelle sont mémorisées des données concernant les stations terrestres AIS valables (12), l'unité de commande (4) étant agencée pour
- valider, après réception d'un rapport de station terrestre AIS (Rapport de Station de base ; Message 4) émis par une station terrestre AIS, avec laquelle l'émission des signaux radio AIS (AIS3/AIS4) du deuxième type de signaux radio AIS (SAT-AIS) doit être désactivée et/ou activée par l'émetteur-récepteur de bateau AIS, la station terrestre AIS émettrice (12) en fonction des données dans le rapport de la station terrestre AIS concernant la station terrestre AIS émettrice et les données mémorisées dans la banque de données par rapport à la station terrestre AIS émettrice, et
- désactiver et/ou activer l'émission des signaux radio AIS (AIS3/AIS4) du deuxième type de signaux radio AIS (SAT-AIS) en fonction de la validation.

8. Procédé pour l'émission et la réception de signaux radio AIS contenant des données de bateau par un émetteur-récepteur de bateau AIS, avec les étapes
- d'émission de signaux radio AIS (AIS1/AIS2) contenant des données de bateau d'un premier type de signaux radio (TER-AIS), qui sont prévus pour l'échange de données de bateau entre bateaux par une unité d'émission radio AIS,
- d'émission de signaux radio AIS (AIS3/AIS4) contenant des données de bateau d'un deuxième type de signaux radio (SAT-AIS), qui sont prévus pour la réception par un satellite et pour la transmission de données de bateau contenues dans les signaux radio AIS (AIS3/AIS4) du deuxième type de signaux radio AIS (SAT-AIS) à une station terrestre au moyen du satellite de réception, par l'unité d'émission radio AIS, et
- la réception de signaux radio AIS (AIS1/AIS2) contenant des données de bateau du premier type de signaux radio (TER-AIS) qui ont été émis par les émetteurs-récepteurs de bateau AIS des bateaux voisins, par une unité de réception radio AIS,
**caractérisé par**
la désactivation ou l'activation de l'émission des signaux radio AIS (AIS3/AIS4) du deuxième type de signaux radio AIS (SAT-AIS) en fonction d'une position de bateau actuelle déterminée par une unité de détermination de position, par une unité de commande.

9. Procédé selon la revendication 8 **caractérisé en ce que** l'unité de commande est reliée à une banque de données dans laquelle sont mémorisées les positions des lignes côtières, pour lequel
- la distance du bateau par rapport à la côte est déterminée par l'unité de commande au moyen de la position actuelle du bateau et des positions de la ligne côtière mémorisées dans la banque de données, et
- l'émission des signaux radio AIS (AIS3/AIS4) du deuxième type de signaux radio AIS (SAT-AIS) est désactivée ou activée par l'unité de commande en fonction de la distance déterminée du bateau par rapport à la côte.

10. Procédé selon la revendication 9 **caractérisé en ce que** l'émission des signaux radio AIS (AIS3/AIS4) du deuxième type de signaux radio AIS (SAT-AIS) est désactivée par l'unité de commande lors du dépassement inférieur de la distance déterminée du bateau par rapport à la côte en dessous d'une distance de référence préalablement définie ou l'émission des signaux radio AIS (AIS3/AIS4) du deuxième type de signaux radio AIS (SAT-AIS) est activée par l'unité de commande lors du dépassement de la distance déterminée du bateau par rapport à la côté au-dessus de la distance de référence préalablement définie.

11. Procédé selon l'une quelconque des revendications 8 à 10 **caractérisé par** la désactivation ou l'activation de l'émission des signaux radio AIS (AIS3/AIS4) du deuxième type de signaux radio AIS (SAT-AIS) en fonction d'un nombre de bateaux voisins par une unité de commande.

12. Procédé selon la revendication 11 **caractérisé en ce que** le nombre des bateaux voisins est déterminé par l'émetteur-récepteur de bateau AIS, en fonction des signaux radio AIS (AIS1/AIS2) reçus du premier type de signaux radio AIS (TER-AIS), qui ont été émis par les bateaux voisins.

13. Procédé selon la revendication 11 ou 12 **caractérisé en ce que** l'émission des signaux radio AIS (AIS3/AIS4) du deuxième type de signaux radio AIS (SAT-AIS) est désactivée par l'unité de commande lors du dépassement du nombre déterminé de bateaux voisins au-dessus d'un nombre de référence préalablement défini ou l'émission des signaux radio AIS (AIS3/AIS4) du deuxième type de signaux radio AIS (SAT-AIS) est activée par l'unité de commande lors du dépassement inférieur du nombre déterminé de bateaux voisins en dessous du nombre de référence préalablement défini.

14. Procédé selon l'une quelconque des revendications 8 à 13 **caractérisé en ce que** l'unité de commande est reliée à une banque de données dans laquelle sont mémorisées des données concernant les stations terrestres AIS valables, pour
- valider, après réception d'un rapport de station terrestre AIS (Rapport de Station de base; Message 4) émise par une station terrestre AIS, avec laquelle l'émission des signaux radio AIS (AIS3/AIS4) du deuxième type de signaux radio AIS (SAT-AIS) doit être désactivée et/ou activée par l'émetteur-récepteur de bateau AIS, la station terrestre AIS émettrice (12) en fonction des données dans le rapport de la station terrestre AIS concernant la station terrestre AIS émettrice et les données mémorisées dans la banque de données par rapport à la station terrestre AIS émettrice, et
- l'émission des signaux radio AIS (AIS3/AIS4) du deuxième type de signaux radio AIS (SAT-AIS) est désactivée ou activée par l'unité de commande en fonction de la validation.
